# EUROPÄISCHE PATENTSCHRIFT

(11) **EP 3 947 021 B1**
(45) Veröffentlichungstag und Bekanntmachung des Hinweises auf die Patenterteilung: **18.01.2023**
(21) Anmeldenummer: 20712498.3
(22) Anmeldetag: 13.03.2020
(51) Int. Cl.: B62D 25/08, B62D 21/15, B62D 21/11, B60L 3/00, B60L 50/00, B60L 53/22

(54) **DEFORMATIONSVORRICHTUNG FÜR EIN KRAFTFAHRZEUG UND KRAFTFAHRZEUG MIT EINER DEFORMATIONSVORRICHTUNG**
DEFORMATION DEVICE FOR A MOTOR VEHICLE, AND MOTOR VEHICLE COMPRISING A DEFORMATION DEVICE
DISPOSITIF DE DÉFORMATION POUR UN VÉHICULE AUTOMOBILE ET VÉHICULE AUTOMOBILE COMPRENANT UN DISPOSITIF DE DÉFORMATION

(30) Priorität: 04.04.2019 DE 102019204789
(43) Veröffentlichungstag der Anmeldung: 09.02.2022
(73) Patentinhaber: Audi AG, 85045 Ingolstadt (DE)
(72) Erfinder: ISAKIEWITSCH, Christian, 85051 Ingolstadt (DE); SWIERSTRA, Nanne, 85092 Kösching (DE); GROSSHAUSER, Florian, 85309 Pörnbach (Puch) (DE); SCHEIBLECKER, Sebastian, 93358 Train (DE); DONNARD, Mickael, 75254 Offenau (DE); O'BRIEN, Sean, 81541 München (DE); ADOLPH, Thorsten, 85120 Hepberg (DE)
(86) Internationale Anmeldenummer: PCT/EP2020/056968
(87) Internationale Veröffentlichungsnummer: WO 2020/200708

(56) Entgegenhaltungen:
- EP-A1- 3 398 837
- WO-A1-2018/138908
- DE-A1-102017 007 401

## Beschreibung

Die Erfindung betrifft eine Deformationsvorrichtung für ein Kraftfahrzeug, welche zumindest eine Trägerstruktur sowie wenigstens ein an der zumindest einen Trägerstruktur an wenigstens zwei voneinander beabstandeten Verbindungselementen fixiertes Lademodul umfasst. Ein weiterer Aspekt der Erfindung betrifft ein Kraftfahrzeug mit einer derartigen Deformationsvorrichtung.

Um fahrzeuginterne Energiespeicher, beispielsweise Traktionsbatterien, aufzuladen, werden Lademodule eingesetzt, welche beispielsweise an einem Fahrzeugunterboden angeordnet sein können. Da es sich bei derartigen Lademodulen um teure Bauteile handelt, sollte deren Beschädigung selbst in Sonderlastfällen vermieden werden. Zu derartigen Sonderlastfällen gehört beispielsweise ein sogenannter frontaler, mittiger Pfahlaufprall, bei welchem es zu einem zentralen Zusammenstoß zwischen dem Kraftfahrzeug und einem pfahlförmigen Objekt kommt.

Aus der EP 2 738 069 A2 ist ein Vorder- oder Hinterwagen eines Kraftfahrzeugs bekannt, welcher einen Hilfsrahmen mit zwei, in Fahrzeugquerrichtung voneinander beabstandeten Längsträgern und einen Querträger aufweist, über welchen die beiden Längsträger miteinander verbunden sind. Der Hilfsrahmen weist eine Versteifungsstruktur zur Erhöhung der Torsionssteifigkeit auf. In die Versteifungsstruktur ist ein Lademodul zur kontaktlosen Energieübertragung integriert.

Die DE 10 2014 206 739 A1 beschreibt ein Schubfeld für einen Vorderwagen einer Fahrzeugkarosserie eines Fahrzeugs. Das aus Metall bestehende Schubfeld weist einen Aufnahmebereich mit Befestigungsmitteln zur mechanischen Befestigung einer Sekundärspule eines induktiven Energieübertragungssystems zur Ladung eines elektrischen Energiespeichers des Fahrzeugs auf.

Aus der DE 10 2017 007 401 A1 ist eine Deformationsvorrichtung für ein Kraftfahrzeug bekannt, welche zumindest eine Rahmenstruktur sowie wenigstens ein, zumindest bereichsweise von der Rahmenstruktur umgebenes Lademodul umfasst. Das Lademodul ist in einer Ausnehmung der Rahmenstruktur angeordnet und die Deformationsvorrichtung umfasst wenigstens eine, zum Absorbieren von unfallbedingter Deformationsenergie ausgebildete Füllstruktur, welche zumindest bereichsweise von der zumindest einen Rahmenstruktur umgeben ist.

Aus der EP 3 398 837 A1 ist eine Fahrzeugvorderteilstruktur bekannt, die Folgendes umfasst: ein Aufhängungselement, das weiter zu einer Fahrzeugvorderseite hin vorgesehen ist als ein Batterieaufnahmeabschnitt und das ein Paar von Seitenschienen aufweist, die mit einem Abstand dazwischen in einer Fahrzeugquerrichtung angeordnet sind und die sich in einer Fahrzeuglängsrichtung erstrecken, und Verbindungselemente, die hintere Abschnitte der Seitenschienen und einen vorderen Abschnitt des Batterieaufnahmeabschnitts verbinden und an denen Verformungsabschnitte ausgebildet sind, die aufgrund der Einwirkung einer Aufpralllast auf die Seitenschienen von einer Fahrzeugvorderseite her so konfiguriert sind, dass sie sich so verformen, dass sich die hinteren Abschnitte der Seitenschienen in Bezug auf den vorderen Abschnitt des Batterieaufnahmeabschnitts zu einer Fahrzeugunterseite hin bewegen, wobei die Verbindungselemente durch Elemente mit einer höheren Dehnbarkeit als die Seitenschienen gebildet werden.

Aus der WO 2018/138908 A1 ist eine berührungslose Stromversorgungsvorrichtung bekannt, die ein Fahrzeug berührungslos mit Strom durch eine magnetische Kopplung zwischen einer Stromzufuhrspule, die in einer Parklücke installiert ist, und einer Stromempfangsspule, die am unteren Teil der Karosserie des Fahrzeugs angebracht ist, versorgt. Die Stromempfangsspule ist eine kreisförmige Spule, in deren diametralem Zentrum ein hohler Teil ausgebildet ist. Die Stromempfangsspule, ein Resonanzkondensator, ein fahrzeugseitiges magnetisches Bauteil und ein stromzuführungsspulenseitiges magnetisches Bauteil sind in einer Stromempfangsspuleneinheit angeordnet. Die Stromempfangsspuleneinheit ist an einem Aufhängungselement befestigt, das eine Elementkomponente ist, die als eine Skelettkomponente der Karosserie dient. Ein hohler Abschnitt, der dem hohlen Teil in der Stromempfangsspuleneinheit entspricht, wird mit dem Aufhängungselement in Kontakt gebracht.

Aufgabe der vorliegenden Erfindung ist es, eine Deformationsvorrichtung sowie ein Kraftfahrzeug der eingangs genannten Art zu schaffen, durch welche ein Lademodul auf besonders günstige Weise geschützt werden kann.

Diese Aufgabe wird durch eine Deformationsvorrichtung sowie durch ein Kraftfahrzeug mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Ein erster Aspekt der Erfindung betrifft eine Deformationsvorrichtung für ein Kraftfahrzeug, welche zumindest eine Trägerstruktur sowie wenigstens ein an der zumindest einen Trägerstruktur an wenigstens zwei voneinander beabstandeten Verbindungselementen fixiertes Lademodul umfasst. Das Lademodul kann beispielsweise als Sekundärspule ausgebildet sein. Über diese Sekundärspule kann eine kontaktlose Energieübertragung zum Laden eines elektrischen Energiespeichers, beispielsweise einer Traktionsbatterie, des Kraftfahrzeugs durch einen induktiven Ladevorgang erfolgen. Bei dem induktiven Ladevorgang kann die kontaktlose Energieübertragung von einer fahrzeugexternen Primärspule an die Sekundärspule erfolgen. Die Deformationsvorrichtung kann die wenigstens zwei voneinander beabstandeten Verbindungselemente umfassen. Die zumindest eine Trägerstruktur kann vorzugsweise als Rahmenstruktur, insbesondere als Hilfsrahmen, welcher auch als Achsträger bezeichnet werden kann, ausgebildet sein. So kann die Trägerstruktur beispielsweise als Vorderachsträger für das Kraftfahrzeug ausgebildet sein.

Gemäß der Erfindung ist vorgesehen, dass die zumindest eine Trägerstruktur wenigstens einen Soll-Knickbereich umfasst, welcher zwischen den wenigstens zwei voneinander beabstandeten Verbindungselementen angeordnet ist, und die zumindest eine Trägerstruktur dazu ausgebildet ist, bei deren unfallbedingter Deformation an dem wenigstens einen Soll-Knickbereich zumindest bereichsweise zu knicken, und dadurch an dem wenigstens einen Soll-Knickbereich auf das wenigstens eine Lademodul zu drücken sowie zumindest eine erste, über ein erstes Verbindungselement der wenigstens zwei Verbindungselemente gebildete Verbindung zwischen dem wenigstens einen Lademodul und der zumindest einen Trägerstruktur zu lösen. Mit anderen Worten kann also bei der unfallbedingten Deformation der Soll-Knickbereich infolge des Knickens auf das Lademodul drücken und dadurch die erste Verbindung lösen. Die über das erste Verbindungselement gebildete, erste Verbindung zwischen dem Lademodul und der Trägerstruktur kann somit durch das Drücken des Soll-Knickbereichs infolge des Knickens auf das Lademodul gelöst werden. Dies ist von Vorteil, da durch das Lösen zumindest der ersten Verbindung eine zumindest bereichsweise Entkoppelung des Lademoduls von der Trägerstruktur bei der unfallbedingten Deformation der Trägerstruktur erfolgen kann, wodurch eine unfallbedingte, durch die Verformung der Trägerstruktur bedingte Belastung des Lademoduls besonders gering gehalten werden kann. Das Lademodul kann durch das Lösen zumindest der ersten Verbindung insbesondere vor unfallbedingter Verformung geschützt werden. Dadurch, dass das Lösen zumindest der ersten Verbindung durch Drücken des Soll-Knickbereich auf das Lademodul erfolgt, kann auf besonders einfache Art und Weise sichergestellt werden, dass dieses Lösen nur dann erfolgt, wenn es zur unfallbedingten Deformation an dem Soll-Knickbereich kommt, so dass beispielsweise bei leichten Unfällen, also beispielsweise bei einem leichten Frontalaufprall, ohne derartig starke Deformation der Trägerstruktur an deren Soll-Knickbereich dementsprechend kein Lösen der ersten Verbindung erfolgt.

An dem Soll-Knickbereich kann die zumindest eine Trägerstruktur bevorzugt bereits in deren unfallfreiem Zustand wenigstens einen Knick aufweisen.

Dadurch kann besonders definiertes, kontrolliertes Knicken erfolgen. Der wenigstens eine Knick kann eine Spitze aufweisen, welche in Einbaulage der Deformationsvorrichtung am Kraftfahrzeug, beispielsweise in Fahrzeughochrichtung des Kraftfahrzeugs, eine geringere Distanz zu dem Lademodul aufweisen kann, als unmittelbar an den Soll-Knickbereich angrenzende Bereiche der Trägerstruktur. Dadurch kann bei der unfallbedingten Deformation besonders schnell ein Kontakt zwischen der Trägerstruktur an deren Soll-Knickbereich und dem Lademodul hergestellt und dementsprechend schnell die erste Verbindung beim Unfall gelöst werden.

Bevorzugt können die wenigstens zwei Verbindungselemente an einander gegenüberliegenden Endbereichen des wenigstens einen Lademoduls angeordnet sein. Dies ermöglicht eine größere Gestaltungsfreiheit bei der Ausgestaltung bzw. Anordnung des Soll-Knickbereichs.

Unter dem Ausdruck "knicken" kann im Rahmen der vorliegenden Erfindung insbesondere ein "ausknicken" der Trägerstruktur verstanden werden. Bei dem Knicken kann es insbesondere zu einer plastischen, unfallbedingten Deformation der Trägerstruktur kommen.

Vorzugsweise kann das Lösen durch Brechen, insbesondere Abbrechen des ersten Verbindungselements erfolgen. Vorteilhaft daran ist, dass die erste Verbindung dadurch besonders schnell bei einem Unfall gelöst werden kann.

Bevorzugt kann die Deformationsvorrichtung dazu ausgelegt sein, dass das Lademodul mittels mindestens eines der Verbindungselemente nach erfolgter unfallbedingter Deformation weiterhin an der Trägerstruktur fixiert ist. Mit anderen Worten kann die Deformationsvorrichtung dazu ausgelegt sein, dass das Lademodul mittels mindestens eines der Befestigungselemente trotz erfolgter unfallbedingter Deformation an der Trägerstruktur fixiert bleibt. Dadurch kann das Lademodul selbst nach der unfallbedingten Deformation verliersicher an der Trägerstruktur fixiert bleiben.

In einer vorteilhaften Weiterbildung der Erfindung ist der wenigstens eine Soll-Knickbereich in einem kleineren Abstand zu der zumindest einen ersten Verbindung angeordnet, als zu zumindest einer zweiten, über ein zweites Verbindungselement der wenigstens zwei Verbindungselemente gebildeten Verbindung zwischen dem wenigstens einen Lademodul und der zumindest einen Trägerstruktur. Dies ist von Vorteil, da durch den kleineren Abstand zur ersten Verbindung eine Druckbelastung sowie eine Biegebeanspruchung des Lademoduls beim unfallbedingten Drücken des Soll-Knickbereichs der Trägerstruktur auf das Lademodul besonders gering gehalten werden kann.

In einer weiteren vorteilhaften Weiterbildung der Erfindung weisen die wenigstens zwei Verbindungselemente voneinander verschiedene Festigkeitskennwerte, insbesondere Zugfestigkeiten, auf. Dies ist von Vorteil, da hierdurch das Lösen zumindest der ersten Verbindung besonders kontrolliert und auf vorbestimmte Weise erfolgen kann. Das Lösen kann besonders gezielt erfolgen, wenn die wenigstens zwei Verbindungselemente unterschiedliche Zugfestigkeiten aufweisen.

In einer weiteren vorteilhaften Weiterbildung der Erfindung weisen die wenigstens zwei Verbindungselemente voneinander verschiedene Lastquerschnitte, insbesondere Spannungsquerschnitte, auf. Dies ist von Vorteil, da das Lösen zumindest der ersten Verbindung anhand der verschiedenen Lastquerschnitte bzw. Spannungsquerschnitte durch unterschiedliche Dimensionierung der wenigstens zwei Verbindungselemente besonders definiert und kontrolliert erfolgen kann.

In einer weiteren vorteilhaften Weiterbildung der Erfindung ist zumindest eines der wenigstens zwei Verbindungselemente als Schraubelement ausgebildet. Dies ist von Vorteil, da hierdurch beispielsweise ein aufwandsarmes Trennen des Lademoduls von der Trägerstruktur, beispielsweise im Rahmen von Wartungsarbeiten, erfolgen kann. Das Schraubelement kann beispielsweise als Schraube, als Gewindestange oder als Gewindebolzen ausgebildet sein, um nur einige Beispiele zu nennen. Prinzipiell denkbar ist beispielsweise auch eine Ausgestaltung des Schraubelements als Schraubenmutter.

In einer weiteren vorteilhaften Weiterbildung der Erfindung ist die zumindest eine erste Verbindung über ein Gehäuseelement des wenigstens einen Lademoduls gebildet. Dies ist von Vorteil, da hierdurch zum Lösen des Lademoduls infolge des Drückens des Soll-Knickbereichs beispielsweise ein kontrolliertes Abbrechen oder Abreißen des entsprechenden Verbindungselements in dessen unmittelbarer Koppelung mit dem Gehäuseelement erfolgen kann. Das Gehäuseelement kann beispielsweise einen Vorsprung oder Flansch aufweisen, an welchem das erste Verbindungselement in Eingriff stehen kann. Das Gehäuseelement kann beispielsweise eine Durchgangsöffnung aufweisen, durch welches das erste Verbindungselement durchgeführt sein kann und dabei in Eingriff mit dem Gehäuseelement stehen kann.

In einer weiteren vorteilhaften Weiterbildung der Erfindung weist die zumindest eine erste Verbindung wenigstens eine Sollbruchstelle auf. Dies ist von Vorteil, da hierdurch ein besonders zuverlässiges und kontrolliertes Lösen des Lademoduls von der Trägerstruktur durch kontrolliertes Brechen oder Abreißen der Sollbruchstelle erfolgen kann. So kann beispielsweise zumindest eines der wenigstens zwei Verbindungselemente mit der Sollbruchstelle versehen sein. Darüber hinaus kann die wenigstens eine Sollbruchstelle auch beispielsweise an einem Gehäuse des Lademoduls vorgesehen sein, wodurch das Gehäuse in vorteilhafter Weise nicht nur zum Schutz jeweiliger elektrischer Komponenten des Lademoduls vor Umgebungseinflüssen dient, sondern auch zur Schadensminimierung des Lademoduls bei der unfallbedingten Deformation der Trägerstruktur beiträgt. Demnach weist das Gehäuse dann eine erhöhte Funktionalität auf.

Ein zweiter Aspekt der Erfindung betrifft ein Kraftfahrzeug mit einer Deformationsvorrichtung gemäß dem ersten Aspekt der Erfindung. Zu der Erfindung gehören auch Weiterbildungen des erfindungsgemäßen Kraftfahrzeugs gemäß dem zweiten Aspekt der Erfindung, die Merkmale aufweisen, wie sie bereits im Zusammenhang mit den Weiterbildungen der erfindungsgemäßen Deformationsvorrichtung gemäß dem ersten Aspekt der Erfindung beschrieben worden sind. Aus diesem Grund sind die entsprechenden Weiterbildungen des erfindungsgemäßen Kraftfahrzeugs hier nicht noch einmal beschrieben.

Das erfindungsgemäße Kraftfahrzeug kann bevorzugt als Kraftwagen, insbesondere als Personenkraftwagen oder Lastkraftwagen, oder als Personenbus ausgestaltet sein. Denkbar ist prinzipiell sogar eine Ausgestaltung des Kraftfahrzeugs als Motorrad.

In einer vorteilhaften Weiterbildung der Erfindung ist der wenigstens eine Soll-Knickbereich in Fahrzeughochrichtung des Kraftfahrzeugs oberhalb des wenigstens einen Lademoduls angeordnet. Dies ist von Vorteil, da hierdurch ein zumindest bereichsweises Beabstanden des Lademoduls von der Trägerstruktur nach dem Lösen zumindest der ersten Verbindung von der Schwerkraft unterstützt wird.

In einer weiteren vorteilhaften Weiterbildung der Erfindung sind die wenigstens zwei Verbindungselemente in Längserstreckungsrichtung des Kraftfahrzeugs voneinander beabstandet. Dies ist von Vorteil, da hierdurch eine besonders lineare Übertragung unfallbedingte Kräfte bei einem Frontalaufprall zwischen den wenigstens zwei Verbindungselementen erfolgen kann, wodurch ein günstiger Kraftfluss mit geringer Kraftumlenkung zum Lösen der ersten Verbindung beitragen kann.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Perspektivansicht auf eine Unterseite einer Deformationsvorrichtung, welche eine Trägerstruktur, mehrere Verbindungselemente und ein über die Verbindungselemente an der Trägerstruktur fixiertes Lademodul umfasst, sowie eine stark abstrahierte Darstellung eines Kraftfahrzeugs, an dessen Unterboden die Deformationsvorrichtung angeordnet ist;
- Fig. 2: eine schematische Perspektivansicht auf eine Oberseite der Deformationsvorrichtung;
- Fig. 3: eine schematische Schnittdarstellung eines Teilbereichs des Kraftfahrzeugs sowie der an dessen Unterboden angeordneten Deformationsvorrichtung im unfallfreien Zustand;
- Fig. 4: eine weitere schematische Schnittdarstellung des Teilbereichs des Kraftfahrzeugs sowie der an dessen Unterboden angeordneten Deformationsvorrichtung bei (während) einer unfallbedingten Deformation einer Trägerstruktur der Deformationsvorrichtung;
- Fig. 5: eine weitere schematische Schnittdarstellung des Teilbereichs des Kraftfahrzeugs sowie der an dessen Unterboden angeordneten Deformationsvorrichtung nach der unfallbedingten Deformation der Trägerstruktur;
- Fig. 6: eine schematische perspektivische Schnittdarstellung eines Teilbereichs eines Gehäuseelements des Lademoduls; und
- Fig. 7: eine weitere schematische perspektivische Schnittdarstellung des Teilbereichs des Gehäuseelements des Lademoduls, wobei an dem Gehäuseelement eine Sollbruchstelle vorgesehen ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

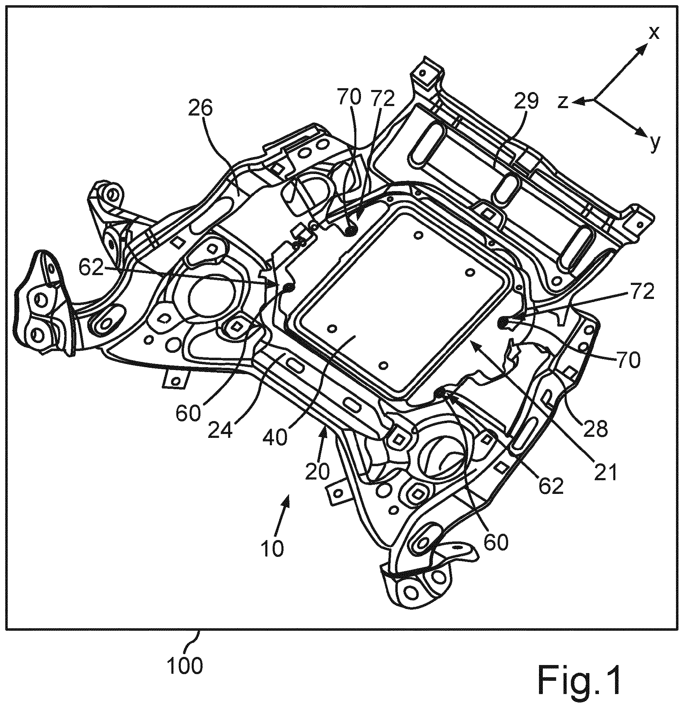

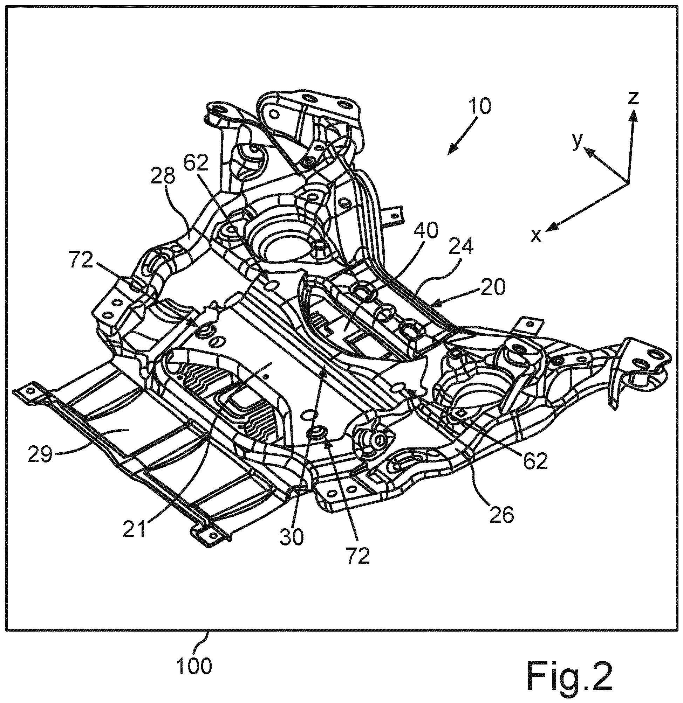

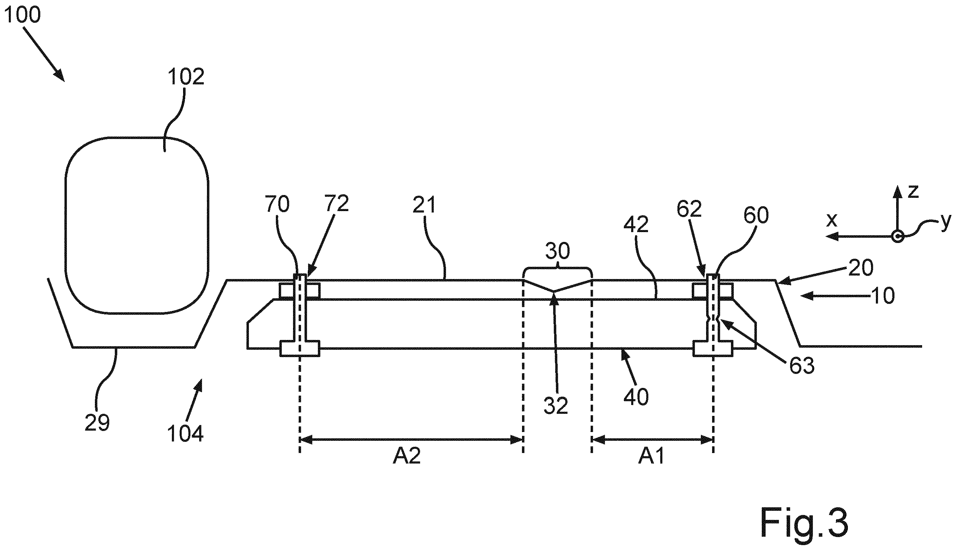

Fig. 1 und Fig. 2 zeigen jeweils schematische Perspektivansichten einer Deformationsvorrichtung 10, welche an einem in Fig. 3 bis Fig. 5 angedeuteten Unterboden 104 eines vorliegend stark abstrahiert dargestellten Kraftfahrzeugs 100 angeordnet ist. Fig. 3, Fig. 4 und Fig. 5 zeigen jeweils schematische Schnittdarstellungen eines Teilbereichs des Kraftfahrzeugs 100 sowie der Deformationsvorrichtung 10.

In Fig. 1 bis Fig. 5 ist jeweils ein auf das Kraftfahrzeug 100 bezogenes Koordinatensystem gezeigt, welches durch eine Fahrzeuglängsrichtung x, durch eine Fahrzeugquerrichtung y sowie durch eine Fahrzeughochrichtung z des Kraftfahrzeugs 100 definiert ist. Die Fahrzeuglängsrichtung x entspricht vorliegend allgemein auch einer Längserstreckungsrichtung der Deformationsvorrichtung 10. Die Fahrzeugquerrichtung y entspricht vorliegend auch allgemein einer Quererstreckungsrichtung der Deformationsvorrichtung 10. Die Fahrzeughochrichtung z entspricht vorliegend auch allgemein einer Hocherstreckungsrichtung der Deformationsvorrichtung 10.

Die Deformationsvorrichtung 10 umfasst eine Trägerstruktur 20 sowie ein an der Trägerstruktur 20 an mehreren voneinander beabstandeten Verbindungselementen 60, 70 der Deformationsvorrichtung 10 fixiertes Lademodul 40. Die Trägerstruktur 20, welche einen beliebigen Aufbau aufweisen kann, kann allgemein als Hilfsrahmen, insbesondere Vorderachsträger, ausgebildet sein, wie in Fig. 1 und Fig. 2 erkennbar ist. Die Trägerstruktur 20 umfasst zwei in Fahrzeugquerrichtung y einander gegenüberliegende und sich zumindest überwiegend in Fahrzeuglängsrichtung x erstreckende Längsträger 26, 28 sowie wenigstens einen (oder mehrere) Querträger 24, welcher sich zumindest überwiegend in Fahrzeugquerrichtung y erstreckt und zumindest mittelbar mit den Längsträgern 26, 28 verbunden ist. Darüber hinaus kann die Trägerstruktur 20 einen beispielsweise als doppelwandiges Blechteil ausgebildeten Lenkungsschutz 29 aufweisen, welcher zum Schutz eines, in Fig. 3 bis Fig. 5 schematisch angedeuteten Lenkgetriebes 102 des Kraftfahrzeugs 100 dient. Der Lenkungsschutz 29 kann, wie in Fig. 3 bis Fig. 5 gezeigt ist, in Fahrzeughochrichtung z unterhalb des Lenkgetriebes 102 verlaufen, sodass der Lenkungsschutz 29 beispielsweise beim Überfahren eines bodennahen Hindernisses eine Kollision dieses Hindernisses mit dem Lenkgetriebe 102 vermeiden kann.

Die Trägerstruktur 20 kann zudem ein Trägerelement 21 aufweisen, welches plattenartig ausgebildet sein kann. Das Trägerelement 21 kann kraftübertragend mit den jeweiligen Längsträgern 26, 28 gekoppelt sein. Das Trägerelement 21 bildet vorliegend eine Verbindungsstruktur, welche sich zwischen den Längsträgern 26, 28 erstreckt und mit diesen gekoppelt ist. Das Trägerelement 21 kann auch als Grundträger bezeichnet werden.

Wie insbesondere in Fig. 1 erkennbar ist, kann die Deformationsvorrichtung 10 beispielsweise vier Verbindungselemente 60, 70 aufweisen, über welche das Lademodul 40 mit der Trägerstruktur 20, vorliegend an dem Trägerelement 21, gekoppelt ist. Von diesen vier Verbindungselementen 60, 70 sind vorliegend jeweils zwei erste Verbindungselemente 60 und jeweils zwei zweite Verbindungselemente 70 vorgesehen. Sowohl in Fig. 1 als auch in Fig. 2 ist erkennbar, dass die jeweiligen ersten Verbindungselemente 60 eine jeweilige erste Verbindung 62 zwischen dem Lademodul 40 und der Trägerstruktur 20 bilden, wohingegen die jeweiligen zweiten Verbindungselemente 70 eine jeweilige zweite Verbindung 72 zwischen Lademodul 40 und der Trägerstruktur 20 bilden. Das Lademodul 40, welches auch als Sekundärspule bezeichnet werden kann, kann allgemein zwischen den Längsträgern 26, 28 positioniert und, über die jeweiligen ersten Verbindungen 62 und zweiten Verbindungen 72 an dem Trägerelement 21 fixiert sein.

Die ersten Verbindungselemente 60 sind in Fahrzeugquerrichtung y voneinander beabstandet. Ebenso sind die zweiten Verbindungselemente 70 in Fahrzeugquerrichtung y voneinander beabstandet. Darüber hinaus sind die zwei ersten Verbindungselemente 60 in Längserstreckungsrichtung x des Kraftfahrzeugs 100 von den zwei zweiten Verbindungselementen 70 beabstandet.

Bei der Fahrt des Kraftfahrzeugs 100 in einer Fahrtrichtung, welche vorliegend einer Pfeilrichtung eines die Fahrzeuglängsrichtung x verdeutlichenden Pfeils entspricht, kann es zu einem sogenannten frontalen, mittigen Pfahlaufprall kommen, bei welchem ein pfahlförmiges Objekt entgegen der Pfeilrichtung zwischen den Längsträgern 26, 28 auf das Kraftfahrzeug 100 aufprallen kann.

Um das Lademodul 40 auf besonders günstige Weise und wirksam vor Beschädigungen zu schützen, umfasst die Trägerstruktur 20 einen Soll-Knickbereich 30, welcher sich vorliegend entlang dem Trägerelement 21 (Verbindungstruktur zwischen den Längsträgern 26, 28) erstreckt. Der Soll-Knickbereich 30 ist vorliegend in Fahrzeughochrichtung z des Kraftfahrzeugs 100 oberhalb des Lademoduls 40 angeordnet.

Eine Haupterstreckungsrichtung des Soll-Knickbereichs 30 verläuft dabei in Fahrzeugquerrichtung y. Der Soll-Knickbereich 30 kann sich, wie in Fig. 2 erkennbar, in Fahrzeugquerrichtung y über das gesamte Trägerelement 21 erstrecken, wodurch ein definiertes Knicken über einen besonders großen Abschnitt erfolgen kann.

Der Soll-Knickbereich 30 ist vorliegend in Fahrzeuglängsrichtung x zwischen den jeweiligen, voneinander beabstandeten Verbindungselementen 60, 70 angeordnet, wie beispielsweise in Fig. 3 erkennbar ist. Fig. 3 zeigt zunächst den Teilbereich des Kraftfahrzeugs 100 im Normalzustand und damit einen unfallfreien Zustand.

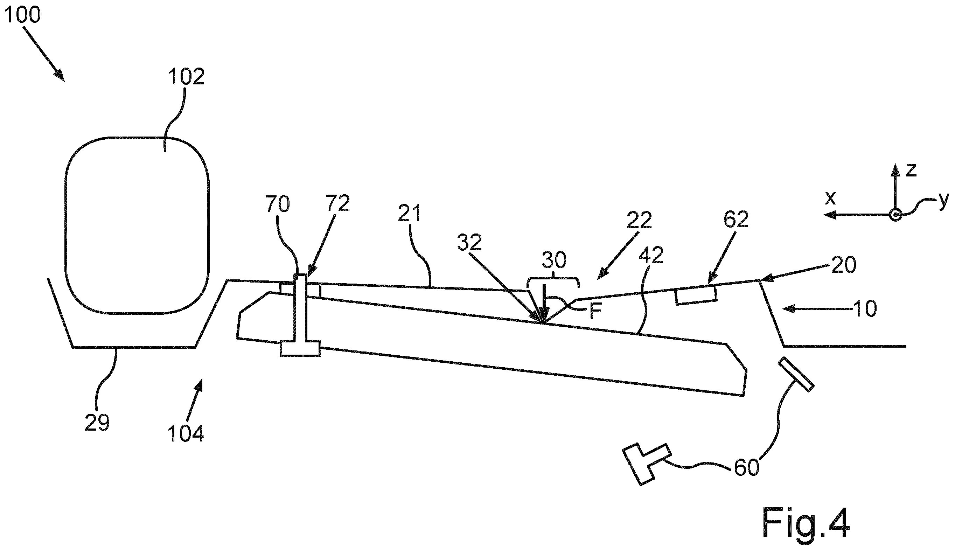

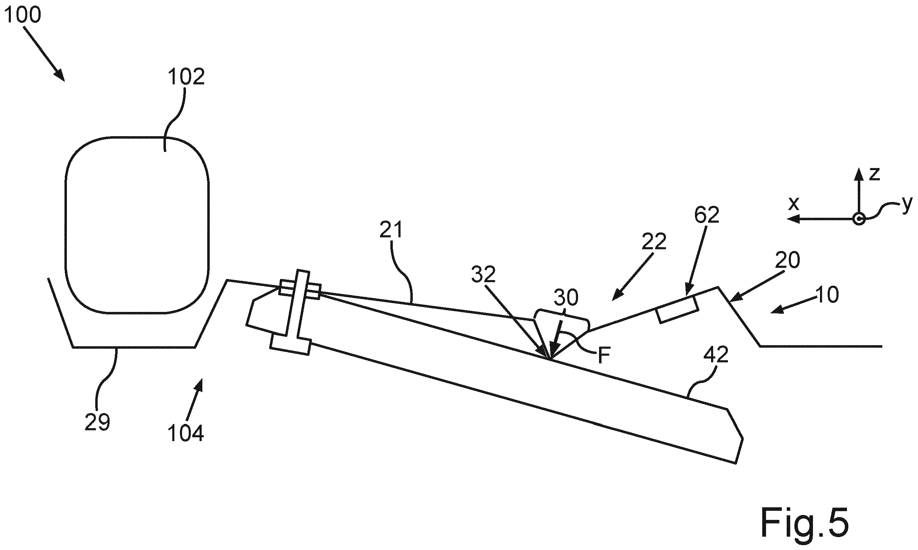

Die Trägerstruktur 20 ist nun dazu ausgebildet, bei deren unfallbedingter Deformation 22, deren Verlauf rein schematisch ausschnittsweise in Fig. 4 und Fig. 5 gezeigt ist, an dem Soll-Knickbereich 30 und damit an dem Trägerelement 21 zu knicken, und dadurch den Soll-Knickbereich 30 auf das Lademodul 40 zu drücken. Die unfallbedingter Deformation 22 resultiert aus dem frontalen, mittigen Pfahlaufprall, durch welchen eine entlang der Fahrzeuglängsrichtung x orientierte Reaktionskraft entstehen kann. Die Reaktionskraft bewirkt ein Stauchen der Trägerstruktur insbesondere an dem Trägerelement 21.

Dabei kann, wie ebenfalls in Fig. 4 und Fig. 5 gezeigt ist, eine in Fahrzeughochrichtung z nach unten in Richtung des Lademoduls 40 ragende Spitze 32 des Soll-Knickbereichs 30 eine Druckkraft F auf das Lademodul 40 ausüben. Der Soll-Knickbereich 30 deformiert sich dabei in Fahrzeughochrichtung z oberhalb des Lademoduls 30 und drückt infolge der Deformation in Fahrzeughochrichtung z nach unten in Richtung des Lademoduls 40.

Infolge des Drückens des Soll-Knickbereich 30 auf das Lademodul 40, also durch Ausüben der Druckkraft F werden die Verbindungen 62, 64 auf Zug belastet und dadurch ein Lösen der jeweiligen ersten Verbindungen 62 bewirkt, wobei dabei die jeweiligen ersten Verbindungselemente 60 dazu ausgelegt sind, infolge des Drückens also infolge der Druckkraft F (welche die Zugbelastung hervorruft), abzubrechen oder abzureißen. Durch das Lösen der ersten Verbindungen 62 kann das Lademodul 40 auf besonders günstige Weise zumindest weitgehend vor unfallbedingten, insbesondere parallel zur Fahrzeuglängsrichtung x wirkenden Deformationskräften geschützt werden. Nach dem Lösen der ersten Verbindungen 62 kann die Trägerstruktur 20 (Hilfsrahmen) weiter deformiert, also gestaucht werden und damit Energie aufnehmen. Da sich das Lademodul 40 jedoch infolge des Lösens der ersten Verbindungen 62 zumindest bereichsweise außerhalb eines Deformationsbereichs der Trägerstruktur 20 bzw. des Trägerelement 21 befindet, bleibt das Lademodul 40 zumindest weitgehend unbeschädigt.

Das Lademodul 40 kann zudem - nach dem Lösen der ersten Verbindungen 62 - über die zweiten Verbindungen 72 relativ zur Trägerstruktur 20 und damit relativ zum Trägerelement 21, bereichsweise in Fahrzeuglängsrichtung z nach unten schwenken, wodurch ein unfallbedingtes Einwirken von Schubkräften auf das Lademodul 40 besonders wirksam unterbunden werden kann.

Fig. 3 zeigt exemplarisch eine Schnittdarstellung in einer x-z-Ebene, in welcher erkennbar ist, dass der Soll-Knickbereich 30 bevorzugt in Fahrzeuglängsrichtung x in einem kleineren Abstand A1 zu den ersten Verbindungen 62 angeordnet ist als zu den zweiten Verbindungen 72 zwischen dem Lademodul 40 und der Trägerstruktur 20. Der Soll-Knickbereich 30 weist dabei in Fahrzeuglängsrichtung x den Abstand A1 zu den ersten Verbindungen 62 auf, wobei der Abstand A1 kleiner ist, als ein Abstand A2 in Fahrzeuglängsrichtung x zwischen dem Soll-Knickbereich 30 und den zweiten Verbindungen 72. Durch diese Abstände A1, A2 kann das Lösen der ersten Verbindungen 62 unter besonders geringer Belastung, insbesondere Biegebelastung, des Lademoduls 40 bewirkt werden.

Die jeweiligen Verbindungselemente 60, 70 können bevorzugt voneinander verschiedene Festigkeitskennwerte, insbesondere Zugfestigkeiten, aufweisen. So können die ersten Verbindungselemente 60 einen kleineren Festigkeitswert, insbesondere eine kleinere Zugfestigkeit, aufweisen, als die zweiten Verbindungselemente 70, wodurch ein besonders zuverlässiges und definiertes Lösen der ersten Verbindungen 62 erzielt werden kann.

Unabhängig davon können die zwei Verbindungselemente 60, 70 bevorzugt voneinander verschiedene Lastquerschnitte, insbesondere Spannungsquerschnitte, aufweisen. Die ersten Verbindungselemente 60 können dabei einen kleineren Lastquerschnitt aufweisen, als die zweiten Verbindungselemente 70, was ebenfalls zu einem besonders zuverlässigen und definierten Lösen der ersten Verbindungen 62 beiträgt. Sofern die Verbindungselemente 60, 70 beispielsweise als Schrauben oder andere Schraubelemente, wie beispielsweise Gewindestangen, ausgebildet sind, so können die ersten Verbindungselemente 60 vorzugsweise einen kleineren Spannungsquerschnitte (als Lastquerschnitte) aufweisen, als die zweiten Verbindungselemente 70. Dies trägt ebenfalls zu einem besonders zuverlässigen und definierten Lösen der ersten Verbindungen 62 bei.

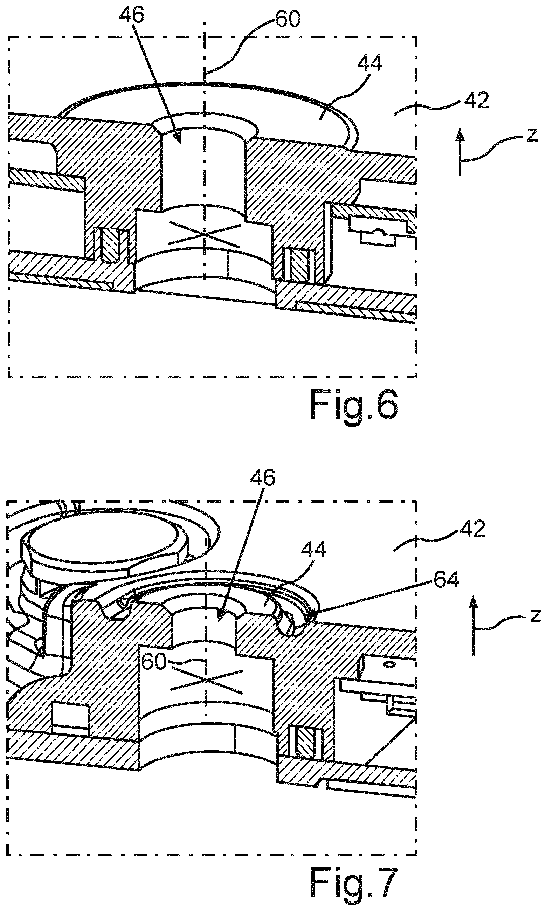

Fig. 6 und Fig. 7 zeigen jeweils ausschnittsweise ein Gehäuse des Lademoduls 40, wobei von diesem Gehäuse lediglich ein Gehäuseelement 42 erkennbar ist. An dem Gehäuseelement 42 ist ein Flansch 44 mit einer Durchgangsöffnung 46 vorgesehen. Die Durchgangsöffnung 46 kann, wie in Fig. 6 erkennbar ist, eine Senkung aufweisen. Die Durchgangsöffnung 46 dient zur Aufnahme des in Fig. 6 lediglich schematisch dargestellten, ersten Verbindungselements 60. Das erste Verbindungselement 60 kann durch die Durchgangsöffnung 46 hindurchgeführt und mit der Trägerstruktur 20 (hier: mit dem Trägerelement 21) verbunden sein. Die erste Verbindung 62 ist dann über das Gehäuseelement 42 des Lademoduls 40 gebildet. Fig. 7 zeigt ebenfalls ausschnittsweise das Gehäuse des Lademoduls 40, wobei erkennbar ist, dass das Gehäuseelement 42 mit einer Sollbruchstelle 64 versehen ist, um das Lösen des Lademoduls von der Trägerstruktur 20 bzw. dem Trägerelement 21 zu erleichtern. Die an dem Gehäuseelement 42 ausgebildete Sollbruchstelle 64 kann beispielsweise als Kerbe ausgebildet sein. Die Kerbe kann, wie in Fig. 7 angedeutet ist, in Umfangsrichtung der Durchgangsöffnung 46 um diese herum verlaufen. In Fig. 3 ist gezeigt, dass zusätzlich oder alternativ zur Sollbruchstelle 64 auch die jeweiligen ersten Verbindungselemente 60 mit einer Sollbruchstelle 63 versehen sein können. Die Sollbruchstelle 63 an den jeweiligen ersten Verbindungselementen 60 kann beispielsweise als umlaufenden Nut ausgebildet sein. Zusammenfassend können also die ersten Verbindungen 62 jeweils wenigstens eine Sollbruchstelle 63, 64 aufweisen.

Zusammenfassend ermöglicht es die vorliegende Deformationsvorrichtung 10 einen Schadensmechanismus bereitzustellen, der das teure Lademodul 40 (Sekundärspule) im Falle eines frontalen Kollisionsereignisses, wie beispielsweise dem frontalen, mittigen Pfahlaufprall, schützt. Die ersten Verbindungselemente 60, welche in Fahrzeuglängsrichtung x (Fahrtrichtung) hinter den zweiten Verbindungselementen 70 angeordnet sind, können beispielsweise als Aluminiumschrauben ausgebildet sein. Des Weiteren können die ersten Verbindungselemente 60 mit einem Gewinde mit der Kurzbezeichnung M6 versehen sein. Die zweiten Verbindungselemente 70 können beispielsweise als Stahlschrauben ausgebildet sein. Des Weiteren können die zweiten Verbindungselemente 70 mit einem Gewinde mit der Kurzbezeichnung M8 versehen sein. Die Verbindungselemente 60, 70 können also bevorzugt voneinander verschiedene Gewindedurchmesser aufweisen und zusätzlich oder alternativ aus unterschiedlichen Werkstoffen mit verschiedenen Werkstofffestigkeiten gebildet sein. Dadurch kann gewährleistet werden, dass die jeweiligen Zugfestigkeit der ersten Verbindungselemente 60 und der zweiten Verbindungselemente 70 unterschiedlich Ist. Darüber hinaus besteht die Möglichkeit die besagten Sollbruchstellen 63, 64 vorzusehen.

Insgesamt zeigen die Beispiele, wie durch die Erfindung ein verbessertes Crashverhalten an einem Vorderachsträger mit induktivem Lademodul bereitgestellt werden kann.

## Patentansprüche

1. Deformationsvorrichtung (10) für ein Kraftfahrzeug (100), welche zumindest eine Trägerstruktur (20) sowie wenigstens ein an der zumindest einen Trägerstruktur (20) an wenigstens zwei voneinander beabstandeten Verbindungselementen (60, 70) fixiertes Lademodul (40) umfasst,
**dadurch gekennzeichnet, dass**
die zumindest eine Trägerstruktur (20) wenigstens einen Soll-Knickbereich (30) umfasst, welcher zwischen den wenigstens zwei voneinander beabstandeten Verbindungselementen (60, 70) angeordnet ist, und die zumindest eine Trägerstruktur (20) dazu ausgebildet ist, bei deren unfallbedingter Deformation (22) an dem wenigstens einen Soll-Knickbereich (30) zumindest bereichsweise zu knicken, und dadurch an dem wenigstens einen Soll-Knickbereich (30) auf das wenigstens eine Lademodul (40) zu drücken sowie zumindest eine erste, über ein erstes Verbindungselement (60) der wenigstens zwei Verbindungselemente (60, 70) gebildete Verbindung (62) zwischen dem wenigstens einen Lademodul (40) und der zumindest einen Trägerstruktur (20) zu lösen.

2. Deformationsvorrichtung (10) nach Anspruch 1,
**dadurch gekennzeichnet, dass**
der wenigstens eine Soll-Knickbereich (30) in einem kleineren Abstand (A1) zu der zumindest einen ersten Verbindung (62) angeordnet ist, als zu zumindest einer zweiten, über ein zweites Verbindungselement (70) der wenigstens zwei Verbindungselemente (60, 70) gebildeten Verbindung (72) zwischen dem wenigstens einen Lademodul (40) und der zumindest einen Trägerstruktur (20).

3. Deformationsvorrichtung (10) nach Anspruch 1 oder 2,
**dadurch gekennzeichnet, dass**
die wenigstens zwei Verbindungselemente (60, 70) voneinander verschiedene Festigkeitskennwerte, insbesondere Zugfestigkeiten, aufweisen.

4. Deformationsvorrichtung (10) nach einem der vorhergehenden Ansprüche,
**dadurch gekennzeichnet, dass**
die wenigstens zwei Verbindungselemente (60, 70) voneinander verschiedene Lastquerschnitte, insbesondere Spannungsquerschnitte, aufweisen.

5. Deformationsvorrichtung (10) nach einem der vorhergehenden Ansprüche,
**dadurch gekennzeichnet, dass**
zumindest eines der wenigstens zwei Verbindungselemente (60, 70) als Schraubelement ausgebildet ist.

6. Deformationsvorrichtung (10) nach einem der vorhergehenden Ansprüche,
**dadurch gekennzeichnet, dass**
die zumindest eine erste Verbindung (62) über ein Gehäuseelement (42) des wenigstens einen Lademoduls (40) gebildet ist.

7. Deformationsvorrichtung (10) nach einem der vorhergehenden Ansprüche,
**dadurch gekennzeichnet, dass**
die zumindest eine erste Verbindung (62) wenigstens eine Sollbruchstelle (63, 64) aufweist.

8. Kraftfahrzeug (100) mit einer Deformationsvorrichtung (10) nach einem der Ansprüche 1 bis 7.

9. Kraftfahrzeug (100) nach Anspruch 8,
**dadurch gekennzeichnet, dass**
der wenigstens eine Soll-Knickbereich (30) in Fahrzeughochrichtung (z) des Kraftfahrzeugs (100) oberhalb des wenigstens einen Lademoduls (40) angeordnet ist.

10. Kraftfahrzeug (100) nach Anspruch 8 oder 9,
**dadurch gekennzeichnet, dass**
die wenigstens zwei Verbindungselemente (60, 70) in Längserstreckungsrichtung (x) des Kraftfahrzeugs (100) voneinander beabstandet sind.

## Claims

1. Deformation device (10) for a motor vehicle (100), which comprises at least one support structure (20) and at least one charging module (40) that is fixed to the at least one support structure (20) on at least two spaced-apart connecting elements (60, 70),
**characterised in that**
the at least one support structure (20) comprises at least one desired buckling region (30), which is arranged between the at least two spaced-apart connecting elements (60, 70), and the at least one support structure (20) is configured to buckle at least in regions at the at least one desired buckling region (30) in the event of accidental deformation (22) thereof, and thereby to press on the at least one charging module (40) at the at least one desired buckling region (30) and to release at least a first connection (62) between the at least one charging module (40) and the at least one support structure (20) that is formed via a first connecting element (60) of the at least two connecting elements (60, 70).

2. Deformation device (10) according to claim 1,
**characterised in that**
the at least one desired buckling region (30) is arranged at a smaller distance (A1) from the at least one first connection (62) than from at least one second connection (72) between the at least one charging module (40) and the at least one support structure (20) that is formed via a second connection element (70) of the at least two connection elements (60, 70).

3. Deformation device (10) according to claim 1 or 2,
**characterised in that**
the at least two connecting elements (60, 70) have strength characteristics, in particular tensile strengths, that differ from one another.

4. Deformation device (10) according to any one of the preceding claims,
**characterised in that**
the at least two connecting elements (60, 70) have load cross-sections, in particular stress cross-sections, that differ from one another.

5. Deformation device (10) according to any one of the preceding claims,
**characterised in that**
at least one of the at least two connecting elements (60, 70) is configured as a screw element.

6. Deformation device (10) according to any one of the preceding claims,
**characterised in that**
the at least one first connection (62) is formed via a housing element (42) of the at least one charging module (40).

7. Deformation device (10) according to any one of the preceding claims,
**characterised in that**
the at least one first connection (62) has at least one predetermined breaking point (63, 64).

8. Motor vehicle (100) comprising a deformation device (10) according to any one of claims 1 to 7.

9. Motor vehicle (100) according to claim 8,
**characterised in that**
the at least one desired buckling region (30) is arranged above the at least one charging module (40) in the vertical direction (z) of the motor vehicle (100).

10. Motor vehicle (100) according to claim 8 or 9,
**characterised in that**
the at least two connecting elements (60, 70) are spaced apart from each other in the longitudinal direction (x) of the motor vehicle (100).

## Revendications

1. Dispositif de déformation (10) pour un véhicule automobile (100) qui comporte au moins une structure porteuse (20) ainsi qu'au moins un module de charge (40) fixé à l'au moins une structure porteuse (20) au niveau d'au moins deux éléments de liaison (60, 70) espacés l'un de l'autre,
**caractérisé en ce que**
l'au moins une structure porteuse (20) comporte au moins une zone de flexion de consigne (30) qui est agencée entre les au moins deux éléments de liaison (60, 70) espacés l'un de l'autre, et l'au moins une structure porteuse (20) est réalisée afin de fléchir au moins par endroits en cas de déformation (22) de celle-ci due à un accident au niveau de l'au moins une zone de flexion de consigne (30), et de presser ainsi contre l'au moins une zone de flexion de consigne (30) sur l'au moins un module de charge (40) ainsi que de détacher au moins une première liaison (62) formée par le biais d'un premier élément de liaison (60) des au moins deux éléments de liaison (60, 70) entre l'au moins un module de charge (40) et l'au moins une structure porteuse (20).

2. Dispositif de déformation (10) selon la revendication 1,
**caractérisé en ce que**
l'au moins une zone de flexion de consigne (30) est agencée à une distance plus petite (A1) de l'au moins une première liaison (62), que d'au moins une seconde liaison (72) formée par le biais d'un second élément de liaison (70) des au moins deux éléments de liaison (60, 70) entre l'au moins un module de charge (40) et l'au moins une structure porteuse (20).

3. Dispositif de déformation (10) selon la revendication 1 ou 2,
**caractérisé en ce que**
les au moins deux éléments de liaison (60, 70) présentent des valeurs caractéristiques de résistance différentes les unes des autres, en particulier des résistances à la traction.

4. Dispositif de déformation (10) selon l'une quelconque des revendications précédentes,
**caractérisé en ce que**
les au moins deux éléments de liaison (60, 70) présentent des sections transversales de charge différentes les unes des autres, en particulier des sections transversales de tension.

5. Dispositif de déformation (10) selon l'une quelconque des revendications précédentes,
**caractérisé en ce que**
au moins un des au moins deux éléments de liaison (60, 70) est réalisé comme élément de vissage.

6. Dispositif de déformation (10) selon l'une quelconque des revendications précédentes,
**caractérisé en ce que**
l'au moins une première liaison (62) est formée par le biais d'un élément de boîtier (42) d'au moins un module de charge (40).

7. Dispositif de déformation (10) selon l'une quelconque des revendications précédentes,
**caractérisé en ce que**
l'au moins une première liaison (62) présente au moins un point destiné à la rupture (63, 64).

8. Véhicule automobile (100) avec un dispositif de déformation (10) selon l'une quelconque des revendications 1 à 7.

9. Véhicule automobile (100) selon la revendication 8,
**caractérisé en ce que**
l'au moins une zone de flexion de consigne (30) est agencée dans le sens de la hauteur du véhicule (z) du véhicule automobile (100) au-dessus d'au moins un module de charge (40).

10. Véhicule automobile (100) selon la revendication 8 ou 9,
**caractérisé en ce que**
les au moins deux éléments de liaison (60, 70) sont espacés l'un de l'autre dans la direction d'extension longitudinale (x) du véhicule automobile (100).
